# EUROPEAN PATENT APPLICATION

(11) **EP 0 927 839 A2**
(43) Date of publication of application: **07.07.1999**
(21) Application number: 98310751.7
(22) Date of filing: 24.12.1998
(51) Int. Cl.: F16J 9/20

(54) **Combined oil ring and manufacturing method thereof**

(30) Priority: 24.12.1997 JP 36643997
(71) Applicant: Teikoku Piston Ring Co., LTd., Chuo-ku, Tokyo 103-0028 (JP)
(72) Inventor: Tanaka, Shoji, Shiojiri-shi, Nagano-ken 399-6462 (JP); Ito, Naoki, Okaya-shi, Nagano-ken 394-0003 (JP)
(74) Representative: Davies, Christopher Robert

(57) **Abstract**

A combined oil ring is comprised of paired upper and lower side rails, and a spacer expander. The side rails are made of martensitic stainless steel and are subjected to gas nitriding. The spacer expander is made of austenitic stainless steel, and has a soft-nitrided layer formed as the under coating, and has a hard film formed by an ion plating on the soft-nitrided layer at the outer circumferential surface. The hard film has a Vicker's hardness of HV1300 to HV2200 and a thickness of 1µm to 50µm. The hard film is a film of a mixture of CrN and Cr₂N or a film of a mixture of CrN, Cr₂N and Cr, and the crystal of CrN has a preferred orientation (200).

## Description

The present invention relates to a combined oil ring mounted on a piston in internal combustion engines.

In combined oil rings used in reciprocating internal combustion engines, the side rail pressing portion of the spacer expander that makes contact with the side rail has a surface pressure greater than 2 MPa, so that the wear resistance and resistance to peeling of the soft-nitrided layer of the conventional art are insufficient in many internal combustion engines. When peeling or wear occurs on the surface treated portion contacting the side rail in the side rail pressing portion of the spacer expander, the pressure which is applied to the side rail decreases and oil ring performance declines. As a result, oil consumption increases.

Whereupon, a combined oil ring having a spacer expander formed with a soft-nitrided layer or a chromium plating and formed with a CrN film over the soft-nitrided layer or the chromium plating is proposed in Japanese Utility Model Publication No. 1-22924. Another combined oil ring formed with a hard film such as TiN film by means of chemical vapor deposition on the inner circumferential surface of the side rail, and formed with a chromium nitride film on the outer circumferential surface of the spacer expander is proposed in Japanese Patent Laid-Open No. 6-235462. Still another combined oil ring formed with a Cr₂N film on the spacer expander is proposed in Japanese Patent Laid-Open No. 9-170659.

However, all of these films have insufficient wear resistance and resistance to peeling.

The compression ring covered on the outer circumferential surface with a composite film comprised of Cr and Cr₂N is known in Japanese Patent Publication No. 6-25597, and the compression ring covered on the outer circumferential surface with a composite film comprised of Cr₂N and CrN is known in Japanese Patent Laid-Open No. 1-159449.

However, the sliding conditions for the compression ring are as follows.
Sliding mating material: Generally cast iron
Sliding speed: On the order of 10m/s
Pressure: Approximately 0.2MPa
Lubricating conditions: Mainly hydrodynamic lubrication

In contrast to the above, however, the sliding conditions for the side rail pressing portions of the spacer expander are as follows.
Sliding mating material: Martensitic stainless steel subjected to gas nitriding
Sliding speed: Virtually zero
Pressure: At least 2MPa
Lubricating conditions: Mainly boundary lubrication
These conditions differ from the above compression ring sliding conditions.

These differing conditions indicate therefore that the physical vapor deposition film for the above described compression ring can not be easily applied to the side rail pressing portions of the spacer expander.

It is an object of the present invention to provide a combined oil ring of improved durability and reliability by means of improving wear resistance and resistance to peeling of a hard film covered on the side rail pressing portion of the space expander.

The combined oil ring of the present invention has one spacer expander and two side rails, with the spacer expander having side rail pressing portions for pressing the side rails, the side rail pressing portions having a hard film of a mixture of CrN and Cr₂N or a hard film of a mixture of CrN, Cr₂N and Cr at the portion contacting the side rail, and the film having a Vicker's hardness of HV1300 to HV2200.

The wear resistance is sufficient, when the film has a Vicker's hardness of HV1300 or more. Further, when the Vicker's hardness is HV2200 or less, the toughness of the film is sufficient and peeling of the film does not occur during sliding movement.

The crystal of CrN preferably has a preferred orientation (200) for sufficient resistance to peeling.

Thickness of the hard film is preferably in a range of 1-50µm. Durability is insufficient when the film thickness drops below 1µm. When the film thickness exceeds 50µm, the wear resistance is sufficient but forming a film with good adhesion is difficult.

The hard film of the present invention can be obtained in an ion plating apparatus by using metallic chromium as the evaporating source and using nitrogen gas as a process gas. The composition of the hard film can be controlled by adjusting the flow rate of the nitrogen gas. When the flow rate of the nitrogen gas is increased, the content of CrN becomes larger. When the flow rate of the nitrogen gas is decreased, the content of Cr₂N becomes larger. Further, the hardness of the hard film can be controlled by adjusting the bias voltage or by adjusting the flow rate of the nitrogen gas. When the bias voltage is increased, the hardness of the film increases. When the flow rate of the nitrogen gas is decreased, Cr₂N content becomes larger and the film hardness is increased.

In the combined oil ring having the aforementioned spacer expander, the side rail is preferably formed with a nitrided layer at the portion which makes contact with the side rail pressing portion of the spacer expander.

In the present invention, the side rail pressing portion of the spacer expander which makes contact with the inner circumferential surface of the side rail has improved wear resistance by means of the aforementioned method. Thus, the oil ring performance does not deteriorate for long period. Further, reliability can be guaranteed since no peeling occurs in the hard film of the side rail pressing portion of the spacer expander even after long, extended periods of operation.

### BRIEF DESCRIPTION OF THE DRAWINGS

The aforesaid and other objects and features of the present invention will become more apparent from the following description of the preferred embodiments of the present invention, described by way of example only, with reference to the accompanying drawings, wherein:
Figure 1 is a longitudinal cross-sectional view showing a combined oil ring which is fitted in an oil ring groove of the piston inserted into the cylinder in one preferred embodiment of the present invention.
Figure 2 is a plan view showing a portion of the material of a spacer expander.

### DESCRIPTION OF THE PREFERRED EMBODIMENTS

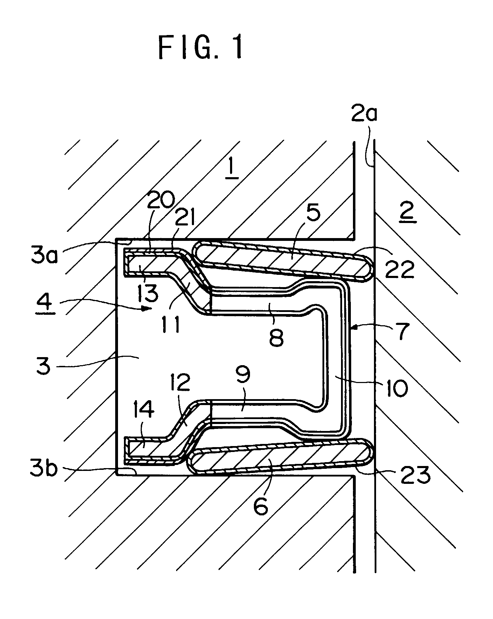

Figure 1 is a longitudinal cross-sectional view showing a combined oil ring which is fitted in an oil ring groove of the piston inserted into the cylinder in one preferred embodiment of the present invention. Referring now to Fig. 1, a combined oil ring 4 is fitted in an oil ring groove 3 formed on the outer circumferential surface of a piston 1 inside a cylinder 2. The combined oil ring 4 is comprised of a pair of upper and lower side rails 5 and 6 which are annular with a gap; and a spacer expander 7 which is annular with a gap.

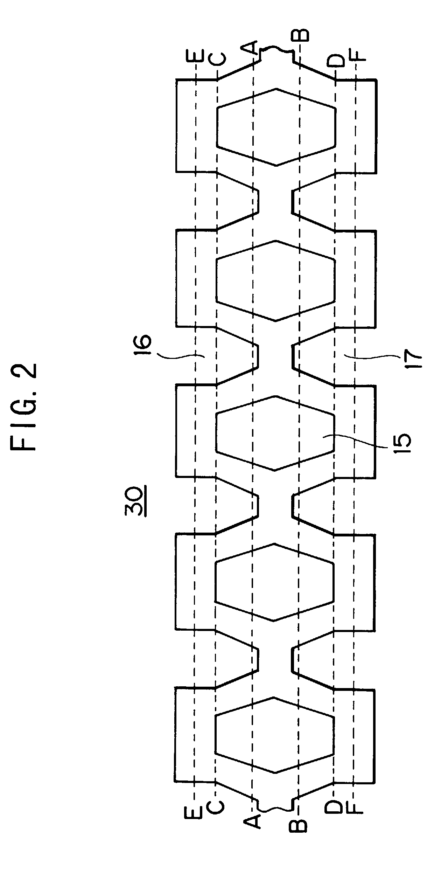

The spacer expander 7 is formed as follows. A material 30 shown in Fig. 2 is formed from a thin strip of austenitic stainless steel and has a symmetrical shape with respect to the center axis running longitudinally. That is, the thin steel strip of austenitic stainless steel is provided with a plurality of tortoise shell-like holes 15, in this example hexagonal holes 15, which serve as oil holes and are equally spaced in a longitudinal direction of the thin steel strip. Substantially V-shaped slits 16 and 17 are provided on both sides of the thin steel strip between the holes 15. This material 30 is bent symmetrically. In other words, the material 30 is bent along the bending lines A-A and B-B into a substantially U-shaped cross section. Next, the upper and lower end portions are bent along the bending lines C-C and D-D to stand obliquely, and then the edges of the upper and lower standing portions are bent horizontally along the bending lines E-E and F-F. Once the above bending step of the material 30 is complete, tufftriding treatment is performed. The material 30 after bending step and tufftriding treatment is then cut into a predetermined length, and formed to be annular so that the side rail pressing portions are arranged at the position of the inner peripheral side, and then formed on the outer circumferential surface by ion plating with a hard film of a mixture of CrN and Cr₂N or a hard film of a mixture of CrN, Cr₂N and Cr.

This spacer expander 7 is composed of a plurality of periodic elements linked together peripherally and having a substantially U-shaped cross section. Each of these periodic elements has a horizontal upper portion 8 and lower portion 9 positioned at intervals in the axial direction. The outer circumferences of these upper and lower portions 8 and 9 are connected by an upright portion 10. Side rail pressing portions 11 and 12 are formed respectively obliquely facing inwards radially at the inner circumference of the upper portion 8 and lower portion 9. At the inner circumference of each of the side rail pressing portions 11 and 12, are inner portions 13 and 14 extending horizontally to the inner radial direction. Oil holes are formed in the upper portion 8, the upright portion 10 and the lower portion 9.

The spacer expander 7 comprised of austenitic stainless steel is subjected to tufftriding treatment and formed on all surfaces with a soft-nitrided layer 20 as the under coating at a Vicker's hardness of HV900 to HV1200. A hard film 21 having a thickness of 1µm to 50µm and having a Vicker's hardness of HV1300 to HV2200 is formed by means of ion plating on the soft-nitrided layer 20 at the outer circumferential surface including the side rail pressing portions 11 and 12. The hard film 21 is a film of a mixture of CrN and Cr₂N or a film of a mixture of CrN, Cr₂N and Cr, and the crystal of CrN has a preferred orientation (200). Chromium plating may be employed instead of the soft-nitrided layer, as the under coating.

The pair of side rails 5 and 6 are made of martensitic stainless steel, subjected to gas nitriding and formed with nitrided layers 22 and 23 on all surfaces. These side rails may be formed with nitrided layers on only the inner and outer circumferential surfaces by ion nitriding.

The spacer expander 7 is provided in the oil ring groove 3 of the piston 1 in a compressed state with the paired ends abutting each other to exert an expanding force in outward radially. The pair of side rails 5 and 6 are supported separately above and below (axially) by the upper and lower portions 8 and 9. The upper and lower side rail pressing portions 11 and 12 apply pressure on the respective inner circumferential surfaces of the pair of side rails 5 and 6, so that the respective outer circumferential surfaces of the side rails 5 and 6 are made contact with the inner circumferential surface 2a of the cylinder 2, and the inner circumferential ends of the side rails 5 and 6 are made contact with the side surfaces 3a and 3b of the oil ring groove 3.

Hereafter, tests for verifying the effect of the present invention will be described. The engine tests were performed utilizing a combined oil ring consisting of a spacer expander of austenitic stainless steel with the structure of the above embodiment, and side rails of martensitic stainless steel having gas nitriding performed on all surfaces. In the evaluation of the hard film of the spacer expander, the amount of lubricating oil consumption indicating the wear resistance was measured, and after operating the engine for 300 hours, observations were made to detect cracks or peeling in the hard film of the side rail pressing portions.

The condition and results are explained below.

### 1. Conditions for forming a hard film of the spacer expander

Tufftriding treatment was performed on the spacer expander to form a soft-nitrided layer with a Vicker's hardness of HV1000 on all surfaces of the spacer expander. Ion plating was then performed on the outer circumferential surface including the side rail pressing portions under the various conditions. The ion plating film had a thickness of 20µm. The ion plating film obtained was subjected to X-ray diffraction analysis to identify the deposition phase and the Vicker's hardness was measured. Table 1 shows deposition phase structure, preferred orientation of the crystal of CrN and film hardness.

**Table 1**

| | No. | Crystal structure | Preferred orientation of CrN crystal | Vicker's hardness of film HV0.1 |
|---|---|---|---|---|
| Comparative Example | 1 | soft-nitriding | - | 1000 |
| | 2 | CrN | (111) | 1350 |
| | 3 | Cr₂N | - | 1700 |
| | 4 | CrN+Cr₂N+Cr | (200) | 1280 |
| | 5 | CrN+Cr₂N+Cr | (200) | 2220 |
| | 6 | CrN+Cr₂N | (200) | 1270 |
| | 7 | CrN+Cr₂N | (200) | 2210 |
| Embodiment | 1 | CrN+Cr₂N+Cr | (200) | 1300 |
| | 2 | CrN+Cr₂N+Cr | (200) | 2200 |
| | 3 | CrN+Cr₂N+Cr | (200) | 1800 |
| | 4 | CrN+Cr₂N | (200) | 1300 |
| | 5 | CrN+Cr₂N | (200) | 2200 |

### 2. Engine tests

The above-mentioned combined oil ring was utilized in a four cylinder diesel engine (bore I.D. 94mm) in endurance tests under high speed, full load conditions. The lubricating oil consumption was measured after engine operation at 50 hours and 300 hours. After completion of the testing, the side rail pressing portion of the spacer expander was observed under a stereo microscope at 50X power, and the hard film was examined for the presence of cracks or peeling.

### 3. Engine Test Results

The results of the engine tests are shown in Table 2. The allowable upper limit for lubricating oil consumption is 40 grams per hour.

**Table 2**

| | No. | Lubricating oil consumption for 50 hours of operation g/Hr | Lubricating oil consumption for 300 hours of operation g/Hr | Presence or absence of cracks or peeling |
|---|---|---|---|---|
| Comparative Example | 1 | 50 | 105 | absence |
| | 2 | 32 | 55 | presence |
| | 3 | 35 | 50 | presence |
| | 4 | 35 | 52 | presence |
| | 5 | 36 | 50 | presence |
| | 6 | 34 | 55 | presence |
| | 7 | 32 | 53 | presence |
| Embodiment | 1 | 28 | 30 | absence |
| | 2 | 25 | 28 | absence |
| | 3 | 27 | 30 | absence |
| | 4 | 28 | 31 | absence |
| | 5 | 25 | 29 | absence |

As shown by the above results, only the soft-nitrided layer of the comparative example 1 had a large amount of wear on the side rail pressing portion of the space expander, so the oil consumption consequently increased. In the hard films of the comparative examples 2 through 7, cracks or peeling occurred, so that the pressure which is applied to the side rail consequently decreased and lubricating oil consumption increased.

In contrast, no cracks or peeling occurred in the hard films of the embodiments 1 through 5 and the consumption of lubricating oil was small. Accordingly, the durability and reliability of the combined oil ring can be guaranteed.

The spacer expander of the combined oil ring of the present invention is not limited by the form shown in the above embodiment. For instance, the inner portions 13 and 14 need not be provided in some configurations. Further, the present invention is also applicable to combined oil rings provided with a spacer expander made of a plurality of radially corrugated periodic elements linked together in the circumferential direction.

## Claims

1. A combined oil ring having one spacer expander and two side rails, said spacer expander having side rail pressing portions for pressing said side rails, said side rail pressing portions having a hard film of a mixture of CrN and Cr₂N or a hard film of a mixture of CrN, Cr₂N and Cr at the portion contacting said side rail, and said film having a Vicker's hardness of HV1300 to HV2200.

2. A combined oil ring as claimed in claim 1, wherein the crystal of said CrN has a preferred orientation (200).

3. A combined oil ring as claimed in claims 1 or 2, wherein said hard film has a thickness of 1µm to 50µm.

4. A combined oil ring as claimed in claims 1, 2 or 3, wherein said side rails have a nitrided layer at the portion contacting said side rail pressing portion.

5. A method for manufacturing the combined oil ring of any one of claims 1 to 4, wherein said hard film is provided by ion plating.
